# EUROPÄISCHE PATENTSCHRIFT

(11) **EP 2 313 350 B1**
(45) Veröffentlichungstag und Bekanntmachung des Hinweises auf die Patenterteilung: **21.08.2013**
(21) Anmeldenummer: 09779568.6
(22) Anmeldetag: 28.05.2009
(51) Int. Cl.: C04B 24/02, C04B 24/04, C04B 24/08, C04B 24/36, C04B 24/42, C04B 28/02

(54) **VERFAHREN ZUR ENTSTAUBUNG EINER PULVERFÖRMIGEN BAUSTOFFZUSAMMENSETZUNG**
METHOD OF DEDUSTING A PULVERULENT BUILDING MATERIAL COMPOSITION
PROCÉDÉ DE DÉPOUSSIÉRAGE D'UNE COMPOSITION PULVÉRULENTE DE MATÉRIAU DE CONSTRUCTION

(30) Priorität: 14.08.2008 EP 08162366
(43) Veröffentlichungstag der Anmeldung: 27.04.2011
(73) Patentinhaber: Construction Research & Technology GmbH, 83308 Trostberg (DE)
(72) Erfinder: HUBER, Manfred, 86179 Augsburg (DE); HOETZL, Klaus, 86199 Augsburg (DE)
(86) Internationale Anmeldenummer: PCT/EP2009/056512
(87) Internationale Veröffentlichungsnummer: WO 2010/018016

(56) Entgegenhaltungen:
- WO-A-2006/084588
- WO-A1-98/23705
- DE-U1-202006 016 797
- US-A- 5 302 308

## Beschreibung

Gegenstand der vorliegenden Erfindung ist ein Verfahren zur Entstaubung einer pulverförmigen Baustoffzusammensetzung.

Insbesondere trockene, pulverförmige Baustoffzusammensetzungen, wie hydraulisch abbindende Massen auf Basis von Zement, Puzzolan oder Kalk und nicht hydraulische abbindende Massen auf der Basis von Gips und Luftkalk (z. B. Fliesenkleber, Fugenfüller, Spachtelmassen, Dichtschlämmen, Putze, Estriche usw.) neigen besonders bei Umfüll- und Mischprozessen zu einer deutlichen Staubbildung. Es wurden deshalb zahlreiche Versuche unternommen, um die Staubentwicklung in solchen Produkten zu vermeiden bzw. vollständig zu unterbinden.

So wurde bspw. versucht, die Staubentwicklung bei hydraulisch abbindenden Massen über den Mahlgrad bzw. die Kornzusammensetzung der pulverförmigen Produkte zu verringern, wobei jedoch die Verarbeitbarkeit gröberer Pulver deutlich schlechter ist.

Eine weitere bekannte Methode ist die Aggregation der feinteiligen Partikel z. B. mit Hilfe von Wasser, wässrigen Lösungen oder Dispersionen. So ist bspw. aus der US 4,780,143 bekannt, Klinker vor der Vermahlung zu Zement zur Verringerung der Staubentwicklung mit wässrigem Schaum zu versetzen. Auch wurden Versuche unternommen, Zementen für Spritzbetonzusammensetzungen Kunststoffdispersionen zuzusetzen, um so die Staubbildung zu erniedrigen. Eine derartige Aggregation ist allerdings dann nachteilig, wenn die so entstaubten hydraulisch abbindenden Massen nachträglich nicht mehr vermahlen werden. In feinpulvrigen Spachtelmassen sind gröbere Aggregationen nämlich nicht akzeptabel, da sie sich auf glatten Oberflächen deutlich abzeichnen.

Auch bekannt ist die Verwendung von so genannten Staubminderungsmitteln, die dem Anmachwasser von Zement zugesetzt werden, um das Stauben beim Aufbringen von Spritzbeton oder Spritzmörtel zu vermindern. Zu diesem Zweck werden insbesondere Polyethylenglykole oder Ethylenoxid/Propylenoxid-Blockcopolymere als Staubbindemittel bzw. Additive zur Verminderung der Staubbildung eingesetzt. Derartige Additive beeinflussen allerdings vielfach das Verarbeitungsverhalten negativ, da sie insbesondere zu einer Abbindeverzögerung oder einer ausgeprägten Hygroskopie der bauchemischen Produkte führen. Verwendet man alternativ hydrophobe Additive, zu denen ebenfalls Ethylenoxid/Propylenoxid-Blockcopolymere gehören, ergeben sich vor allem bei pulverförmigen bauchemischen Produkten Benetzungsschwierigkeiten.

Aus der WO 2006/084588 A1 ist die Verwendung von aliphatischen Kohlenwasserstoffen und Kohlenwasserstoffgemischen als Additive zur Verminderung des Staubens trockener und insbesondere pulverförmiger bauchemischer Produkte wie Fliesenkleber, Fugenfüller, Spachtelmassen, Dichtschlämmen usw. bekannt. Beschrieben werden insbesondere Kohlenwasserstoffe, die unter Normalbedingungen flüssig sind, wobei aliphatische Kohlenwasserstoffe, insbesondere in linearer oder verzweigter, gesättigter oder ungesättigter Form, mit Siedepunkten von 100 bis 400°C besonders erwähnt werden.

Das Gebrauchsmuster DE 20 2006 016 797 U1 betrifft einen staubarmen Trockenmörtel, welcher mindestens eine staubmindernde Komponente in einer Menge von 0,01 bis 10 Gew.-%, bezogen auf die Gesamttrockenmischung, enthält. Die staubmindernde Komponente wird hierbei ausgewählt aus der Reihe der Monoalkohole, wie z. B. 3-Methoxybutanol, Benzylalkohol, 1,2-Propandiol, Hexanol, Diacetonalkohol, Ethyldiglykol, Isopropanol, 2-Ethylhexanol und/oder Alkandiole wie 2-Methylpentan-2,4-diol, Neopenthylglykol und n-Butan-2,5-diol. Weiterhin geeignet sind gemäß dieser Publikation Glykole, Polyethylenglykole, Fettalkohole und Polyphenylalkohole. Weiterhin werden aliphatische Ether, Zelluloseether, Alkoxylate und Methyl-/Ethyl-Fettsäureether erwähnt.

Mit den bekannten Maßnahmen nach dem Stand der Technik konnte das grundlegende Problem des Staubens pulverförmiger Baustoffzusammensetzungen nach wie vor nicht, vor allem unter wirtschaftlichen Gesichtspunkten, zufrieden stellend gelöst werden. Insbesondere ist es als nachteilig anzusehen, das bisher relativ große Mengen des Entstaubungsmittels eingesetzt werden müssen. Dies stellt nicht nur einen Kostenfaktor da, sondern kann auch beim Einsatz der Baustoffzusammensetzungen zu einer erheblichen Belastung der Raumluft mit flüchtigen organischen Verbindungen führen.

Der vorliegenden Erfindung lag deshalb die Aufgabe zugrunde, ein Verfahren zur Herstellung pulverförmiger Baustoffzusammensetzungen zur Verfügung zu stellen, welches im Vergleich zum Stand der Technik mit einem geringeren Einsatz von Entstaubungsmitteln auskommt. Die Entstaubungswirkung sollte aber zumindest auf dem Niveau der bisher verwendeten Verfahren liegen. Die hierzu verwendeten Additive sollten sich durch eine einfache Applizierbarkeit bei gleichzeitig hoher Wirksamkeit auszeichnen. Außerdem sollten sie bei der Anwendung nicht zur Klumpenbildung neigen und auch das geforderte Eigenschaftsprofil der Produkte nicht negativ beeinflussen.

Gelöst wurde diese Aufgabe durch ein Verfahren zur Entstaubung einer pulverförmigen Baustoffzusammensetzung, wobei mindestens ein bei 20°C flüssiges Entstaubungsmittel mit einer Temperatur von > 40°C mit der pulverförmigen Baustoffzusammensetzung in Kontakt gebracht wird. Bevorzugt geschieht dies durch Aufsprühen.

Abgesehen davon, dass die Aufgabenstellung in Bezug auf sämtliche Vorgaben vollständig erfüllt werden konnte, hat sich überraschenderweise herausgestellt, dass die erhöhte Temperatur zu einer deutlich verbesserten Verarbeitbarkeit der verwendeten Entstaubungsmittel führt.

Besonders geeignet im Rahmen der vorliegenden Erfindung sind Entstaubungsmittel enthaltend Alkohole, wie 3-Methoxybutanol, Benzylalkohol, 1,2-Propandiol, Hexanol, Diacetonalkohol, Ethyldiglycol, Isopropanol, 2-Ethylhexanol, 2-Methyl-pentane-2,4-diol, Neopentylglycol, 2-Methyl-pentane-2,4-diol, Neopentylglykol, n-Butane-1,3-diol, n-Butane-1,5-diol, n-Butane-2,5-diol und/oder Glycole und/oder Polyethylenglycole und/oder Fettalkohole. Weiterhin können aliphatische Ether, insbesondere Dialkylether und/oder Celluloseether und/oder Alkoxylate und/oder Methyl-/Ethyl-Fettsäureether, tertiäre aliphatisch gesättigte Monocarbonsäuren mit 5-20 Kohlenstoff-Atomen, ungesättigte Monocarbonsäuren mit 5 bis 20 Kohlenstoff-Atomen, Fettsäuren und deren Salze, Fettsäureester, N-Alkyl-N-Alkanolamine, Propylencarbonat, Acetate wie Isopropylacetat, Hexylacetat, Ethylglykolacetat, aliphatische Phosphorsäureester, Cyclohexanon, Methylisobutylketone, Methylheptylketone, Perflurpolymethylisopropylether, Siliconöle, Polysiloxan-Polyether-Copolymere, Kohlenwasserstoffe, insbesondere lineare oder verzweigte, bevorzugt lineare, gesättigte oder ungesättigte, bevorzugt gesättigte und Mischungen daraus eingesetzt werden. Weiterhin ist es natürlich auch möglich Mischungen der genannten Entstaubungsmittel einzusetzen.

Die Temperatur des bei dem erfindungsgemäßen Verfahren eingesetzten Entstaubungsmittels kann in weiten Bereichen variiert werden. Bevorzugt besitzt das eingesetzt Entstaubungsmittel eine Temperatur zwischen 41 und 150 °C, besonders bevorzugt 45 bis 80°C und insbesondere 50 bis 65°C. Hierbei kann es auch zweckmäßig sein, die gesamte pulverförmige Baustoffzusammensetzung vor dem Aufbringen des Entstaubungsmittels zu erwärmen. Der hierbei bevorzugte Temperaturbereich der pulverförmigen Baustoffzusammensetzung liegt zwischen 41 und 150 °C, besonders bevorzugt 45 bis 80°C und insbesondere 50 bis 65°C. In einer bevorzugten Ausführungsform wird die pulverförmige Baustoffzusammensetzung auf eine Temperatur erwärmt, die dem eingesetzten Entstaubungsmittel ähnlich ist, wobei ein Temperaturunterschied von < ±5 °C besonders bevorzugt ist.

Als erfindungswesentlich hat es sich erwiesen, dass die jeweils eingesetzten Entstaubungsmittel bei 20°C in flüssiger Form vorliegen. Der Vorteil ist darin zu sehen, dass sich flüssige Anwendungsformen besser auf die zu entstaubenden, pulverförmige Baustoffzusammensetzung aufbringen lassen und dass der Auftrag insgesamt im Vergleich zu festen Varianten homogener erfolgt. Hierdurch werden im Falle der erfindungsgemäßen flüssigen Verbindungen deutlich geringere Mengen benötigt. Selbstverständlich sind auch die Adhäsion bzw. die Anfangshaftung der bei 20°C flüssigen Additive im Vergleich zu bei dieser Temperatur festen Entstaubungsmitteln verbessert. Die erfindungsgemäßen Verbindungen besitzen hierbei bevorzugt eine kinematische Viskosität bei 20°C von 0,1 bis 30 mm²/s, insbesondere 5 bis 20 mm²/s.

Im Allgemeinen erfolgt die bereits erwähnte Beaufschlagung bzw. das in Kontakt bringen durch Aufsprühen oder Bedüsen der jeweils gewählten Entstaubungs- oder Staubminderungsadditive auf die pulverförmigen Baustoffzusammensetzungen. Auf diese Weise kann der homogene Auftrag in einfacher Weise bei gleichzeitig guter Haftung und Anfangsadhäsion gewährleistet werden. Selbstverständlich kann das in Kontakt bringen der pulverförmigen Baustoffzusammensetzungen mit dem jeweiligen Additiv auch auf jede andere geeignete Art und Weise erfolgen, wie sie dem Fachmann geläufig sind. In Frage kommen hier insbesondere auch das Abmischen bzw. Unterrühren der flüssigen Additive, wobei jedoch der Sprühauftrag eindeutig zu bevorzugen ist, da dies die einfachste und wirtschaftlich attraktivste Auftragungsvariante darstellt.

Die pulverförmigen Baustoffzusammensetzungen, enthaltend mindestens ein Entstaubungsmittel, sollen im Rahmen der vorliegenden Erfindung vorzugsweise in trockener Form vorliegen, wobei hierunter zu verstehen ist, dass diese einen Wassergehalt nach Karl-Fischer von weniger als 5 Gew.-%, vorzugsweise weniger als 1 Gew.-% und besonders bevorzugt von weniger als 0,1 Gew.-% aufweisen.

Die durchschnittliche Partikelgröße in den jeweiligen pulverförmigen Baustoffzusammensetzungen sollte vorzugsweise von 0,01 bis 5 mm reichen. Als besonders vorteilhaft hat es sich erwiesen, wenn die pulverförmigen Baustoffzusammensetzungen einen durch Laserdiffraktometrie bestimmten Korngrößenanteil von mindestens 2 Gew.% ≤ 68 µm und mindestens 10 Gew.% ≤ 200 µm aufweisen. Besonders bei den sehr feinteiligen Varianten kommt das Entstaubungspotenzial des erfindungsgemäßen Verfahrens besonders deutlich zum Tragen.

Grundsätzlich lassen sich mit den erfindungsgemäß verwendeten Additiven beliebige pulverförmige Baustoffzusammensetzungen signifikant entstauben. Stellvertretend für die Baustoffzusammensetzungen sollen insbesondere hydraulisch abbindende Zement-basierte und nicht hydraulisch abbindende Gips-basierte Massen, so genannte Werktrockenmörtel genannt sein, bei denen feingemahlene mineralische Stoffe unter Wasseraufnahme an Luft oder unter Wasser steinartig erhärten und nach ihrem Aushärten funktionsfähig sind. Derartige Werktrockenmörtel kommen nämlich im Allgemeinen als feine Pulver in den Handel, welche dann in der endgültigen Abmischung an der Baustelle mit dem Anmachwasser angesetzt werden. Beim Umfüllen bzw. Entleeren der Transportgebinde kommt es dann zu der nachteiligen starken Staubentwicklung, welche durch den Einsatz der nun vorgeschlagenen Dialkylether deutlich reduziert oder vollständig unterbunden werden kann.

Als besonders vorteilhaft hat sich die erfindungsgemäße Verwendung dann erwiesen, wenn es sich bei dem Werktrockenmörtel um Fliesenkleber, Fugenfüller, Spachtelmassen, Dichtschlämmen, Reparaturmörtel, Ausgleichsmörtel, Armierungskleber, Kleber für Wärmedämmverbundsysteme (WDVS), mineralische Putze, Feinspachtel und Estrichsysteme handelt.

Auch geeignet für das erfindungsgemäße Verfahren sind pulverförmige Polymere und insbesondere redispergierbare Polymerpulver oder Fliesenkleber, welche die pulverförmigen Baustoffzusammensetzungen darstellen oder welche als deren pulverförmige Bestandteile vorliegen. Die genannten redispergierbaren Polymerpulver sind vorzugsweise aus mindestens einem Vertreter der Reihe Vinylacetat, Styrol, Butadien, Ethylen, Versatinsäure-Vinylester, Harnstoff-Formaldehyd-Kondensationsprodukte und Melamin-Formaldehyd-Kondensationsprodukte aufgebaut.

Um das Entstauben oder die Staubminderung im gewünschten vorteilhaften Ausmaß auch tatsächlich zu erreichen, empfiehlt es sich, die Entstaubungsmittel der bevorzugt trockenen, pulverförmigen Baustoffzusammensetzungen in einer Menge von 0,01 bis 6 Gew.-%, vorzugsweise von 0,2 bis 4 Gew.-% und besonders bevorzugt von 0,3 bis 2,0 Gew.-% zuzusetzen.

Selbstverständlich können die jeweils zu entstaubenden pulverförmigen Baustoffzusammensetzungen, denen die Additive erfindungsgemäß zugesetzt werden, neben den genannten feinteiligen Partikeln zusätzlich mindestens einen Vertreter der Reihe Bindemittel, Füllstoffe, Verdicker, Wasserretentionsmittel, Dispergiermittel, Rheologieverbesserer, Entschäumer, Verzögerer, Beschleuniger, Zusatzstoffe, Pigmente, organische oder anorganische Fasern enthalten.

Grundsätzlich wird empfohlen, dass die pulverförmigen Baustoffzusammensetzungen, die im Rahmen der vorliegenden Erfindung entstaubt werden sollen, einen Anteil an Bindemittel im Bereich von 5 bis 80 Gew.-%, vorzugsweise von 10 bis 70 Gew.-% und besonders bevorzugt von 15 bis 50 Gew.-% aufweisen.

Die erfindungsgemäß eingesetzten Entstaubungsmittel sind dabei bevorzugt oxidationsstabil und gehen insbesondere unter Luftsauerstoff keine chemischen Reaktionen ein, so dass ihre Entstaubungseigenschaften in Bezug auf die pulverförmigen Baustoffzusammensetzungen auch über einen langen Lagerungszeitraum zumindest im wesentlichen unverändert erhalten bleiben.

Erfindungsgemäß bevorzugt ist es, wenn die erfindungsgemäßen Entstaubungsmittel bei einer Temperatur von 107 °C einen Verdampfungsverlust über 24 Stunden von weniger als 5 Gew.-%, vorzugsweise von weniger als 2 Gew.-%, besonders bevorzugt von weniger als 1 Gew.-%, bezogen auf die eingesetzten Entstaubungsmittel, aufweisen. Auf diese Weise wird gewährleistet, dass einerseits eine Langzeitentstaubung in Bezug auf die erfindungsgemäß behandelten pulverförmigen Baustoffzusammensetzungen erreicht wird und andererseits die erfindungsgemäß behandelten Produkte zumindest im wesentlichen geruchsfrei bzw. geruchsarm sind, da die Entstaubungsmittel nicht in nennenswerten Mengen freigesetzt werden.

Die im Rahmen des erfindungsgemäßen Verfahrens eingesetzten Entstaubungsmittel können in ihrer Staubminderungs- bzw. Entstaubungswirkung natürlich auch durch sämtliche andere geeignete Additive unterstützt werden. Auch wenn die vorgeschlagenen Entstaubungsmittel in den überwiegenden Anwendungsfällen vollkommen ausreichend sind, um das Staubungsverhalten pulverförmiger Baustoffzusammensetzungen zu reduzieren bzw. vollständig zu unterbinden, so kann es in Spezialfällen durchaus sinnvoll sein, die vorteilhafte Wirkung dieser Additive durch andere Zusatzmittel zu unterstützen, welche ihrerseits ebenfalls mindernd auf das Staubungsverhalten wirken.

Insgesamt werden mit den vorgeschlagenen Verfahren pulverförmige Baustoffzusammensetzungen zur Verfügung gestellt, welche bei sehr niedrigem Einsatz an Entstaubungsmittel eine stark reduzierte bzw. vollständig unterbundene Staubneigung aufweisen, so dass auch unter den Gesichtspunkten der Arbeitssicherheit, insbesondere beim Umfüll- und Verarbeitungsvorgang, eine hervorragende Wirksamkeit festzustellen ist. Insbesondere kann der verminderte Einsatz an Entstaubungsmittel auch zu einer geringeren Belastung der Raumluft und der Umwelt mit flüchtigen organischen Verbindungen beitragen.

Die nachfolgenden Beispiele verdeutlichen die Vorteile der vorliegenden Erfindung.

### Beispiele

### Messmethode

Die Messungen wurden in Anlehnung an DIN 55999-2 "Bestimmung einer Maßzahl für die Staubentwicklung von Pigmenten und Füllstoffen - Teil 2: Fallmethode" durchgeführt. Zur Messung wurde das "Staubmessgerät SP3" der LORENZ MESSGERÄTE-BAU GmbH & Co. KG verwendet.

### Probenherstellung

Die jeweilige Trockenmörtelmischung wurde in ein Mischgefäß vorgelegt. Das Entstaubungsadditiv wurde auf 50 °C erwärmt und im angegebenen Mengenverhältnis auf die Trockenmörtelmischung mittels Drucksprüher ("Blumenspritze") aufgebracht und mit dem Mörtel vermischt.

### Beispiel 1:

### Fugenmörtel 1:

| | |
|---|---|
| Portlandzement CEM I | 36,5 Gew.-% |
| Quarzsand 0,1-0,2 mm | 51,8 Gew.-% |
| Kalksteinmehl < 0,1 mm | 8,0 Gew.-% |
| Celluloseether | 2,2 Gew.-% |
| Dispersionspulver (Vinnapas 7031 H^{®} der Wacker Chemie AG) | 1,0 Gew.-% |
| Erhärtungsbeschleuniger (Kalziumformiat) | 0,5 Gew.-% |

| | Staubzahl nach 0 Tagen | Staubzahl nach 28 Tagen |
|---|---|---|
| Fugenmörtel 1 (Vergleich) | 150 | 200 |
| Fugenmörtel 1 + 3 % Pluriol^{®} E 400 (Vergleich) | 10 | 30 |
| Fugenmörtel 1 + 2 % Pluriol^{®} E 400 (Vergleich) | 30 | 50 |
| Fugenmörtel 1 + 2 % Pluriol^{®} E 400 (50 °C) | 10 | 30 |

Pluriol® E 400 der BASF SE: Polyethylenglykole der allgemeinen Formel HO(CH₂CH₂O)ₙH und einer mittleren Molmasse von 400.

Im Vergleich zur Dosierung des Entstaubungsmittels bei Raumtemperatur (20°C) resultiert durch die Dosierung bei 50°C bei gleicher Entstaubungswirkung ein geringerer Bedarf von ca. 30 %.

### Beispiel 2:

### Fliesenmörtel 1:

| | |
|---|---|
| Portlandzement CEM I | 60,5 Gew.-% |
| Quarzsand 0,1 - 0,5 mm | 23,6 Gew.-% |
| Kalksteinmehl < 0,1 mm | 10,5 Gew.-% |
| Celluloseether | 1,9 Gew.-% |
| Dispersionspulver (Elotex AP 200^{®} der Elotex AG) | 3,0 Gew.-% |
| Erhärtungsbeschleuniger (Kalziumformiat) | 0,5 Gew.-% |

| | Staubzahl nach 0 Tage | Staubzahl nach 28 Tage |
|---|---|---|
| Fliesenmörtel 1 (Vergleich) | 150 | 250 |
| Fliesenmörtel 1 + 2 % Pluriol^{®} E 400 (Vergleich) | 30 | 50 |
| Fliesenmörtel 1 + 2 % Pluriol^{®} E 400 (50 °C) | 10 | 30 |

Im Vergleich zur Dosierung des Entstaubungsmittels bei Raumtemperatur (20°C) resultiert durch die Dosierung bei 50°C eine deutlich verbesserte Entstaubungswirkung bei gleicher Einsatzmenge.

## Patentansprüche

1. Verfahren zur Entstaubung einer pulverförmigen Baustoffzusammensetzung, **dadurch gekennzeichnet, dass** mindestens ein bei 20°C flüssiges Entstaubungsmittel mit einer Temperatur von zwischen 41 und 150 °C mit der pulverförmigen Baustoffzusammensetzung in Kontakt gebracht wird.

2. Verfahren nach Anspruch 1, **dadurch gekennzeichnet, dass** als Entstaubungsmittel Alkohole, wie 3-Methoxybutanol, Benzylalkohol, 1,2-Propandiol, Hexanol, Diacetonalkohol, Ethyldiglycol, Isopropanol, 2-Ethylhexanol, 2-Methyl-pentane-2,4-diol, Neopentylglycol, 2-Methyl-pentane-2,4-diol, Neopentylglykol, n-Butane-1,3-diol, n-Butane-1,5-diol, n-Butane-2,5-diol und/oder Glycole und/oder Polyethylenglycole und/oder Fettalkohole eingesetzt werden.

3. Verfahren nach Anspruch 1 oder 2, **dadurch gekennzeichnet, dass** als Entstaubungsmittel aliphatische Ether und/oder Celluloseether und/oder Alkoxylate und/oder Methyl-/Ethyl-Fettsäureether eingesetzt werden.

4. Verfahren nach einem der Ansprüche 1 bis 3, **dadurch gekennzeichnet, dass** als Entstaubungsmittel tertiäre aliphatisch gesättigte Monocarbonsäuren mit 5-20 Kohlenstoff-Atomen, ungesättigte Monocarbonsäuren mit 5 bis 20 Kohlenstoff-Atomen, Fettsäuren und deren Salze, sowie Mischungen daraus eingesetzt werden.

5. Verfahren nach einem der Ansprüche 1 bis 4, **dadurch gekennzeichnet, dass** als Entstaubungsmittel Fettsäureester, N-Alkyl-N-Alkanolamine, Propylencarbonat, Acetate wie Isopropylacetat, Hexylacetat, Ethylglykolacetat, aliphatische Phosphorsäureester und Mischungen daraus eingesetzt werden.

6. Verfahren nach einem der Ansprüche 1 bis 5, **dadurch gekennzeichnet, dass** als Entstaubungsmittel Cyclohexanon, Methylisobutylketone, Methylheptylketone und Mischungen daraus eingesetzt werden.

7. Verfahren nach einem der Ansprüche 1 bis 6, **dadurch gekennzeichnet, dass** als Entstaubungsmittel Perflurpolymethylisopropylether eingesetzt wird.

8. Verfahren nach einem der Ansprüche 1 bis 7, **dadurch gekennzeichnet, dass** als Entstaubungsmittel Siliconöle, Polysiloxan-Polyether-Copolymere und Mischungen daraus eingesetzt werden.

9. Verfahren nach einem der Ansprüche 1 bis 8, **dadurch gekennzeichnet, dass** als Entstaubungsmittel Kohlenwasserstoffe eingesetzt werden.

10. Verfahren nach einem der Ansprüche 1 bis 9, **dadurch gekennzeichnet, dass** die pulverförmige Baustoffzusammensetzung einen durch Laserdiffraktometrie bestimmten Korngrößenanteil von mindestens 2 Gew.% ≤ 68 µm und mindestens 10 Gew.% ≤ 200 µm aufweist.

11. Verfahren nach einem der Ansprüche 1 bis 10, **dadurch gekennzeichnet, dass** die Baustoffzusammensetzung pulverförmige Polymere und insbesondere redispergierbare Polymerpulver enthält.

12. Verfahren nach einem der Ansprüche 1 bis 11, **dadurch gekennzeichnet, dass** die Baustoffzusammensetzung einen Anteil an Entstaubungsmittel von 0,01 bis 6 Gew.-% aufweist.

13. Verfahren nach einem der Ansprüche 1 bis 12, **dadurch gekennzeichnet, dass** die Baustoffzusammensetzung einen Wassergehalt nach Karl-Fischer von weniger als 5 Gew.-% aufweist.

14. Verfahren nach einem der Ansprüche 1 bis 13, **dadurch gekennzeichnet, dass** die Baustoffzusammensetzung zusätzlich mindestens einen Vertreter der Reihe Bindemittel, Füllstoffe, Verdicker, Wasserretentionsmittel, Dispergiermittel, Zusatzstoffe, Pigmente, organische oder anorganische Fasern enthält.

15. Verfahren nach einem der Ansprüche 1 bis 14, **dadurch gekennzeichnet, dass** die Baustoffzusammensetzung einen Anteil an hydraulischem Bindemittel im Bereich von 5 bis 80 Gew.-% aufweist.

## Claims

1. Process for dedusting a pulverulent building material composition, **characterized in that** at least one dedusting agent which is liquid at 20°C is brought into contact at a temperature of between 41 and 150°C with the pulverulent building material composition.

2. Process according to Claim 1, **characterized in that** alcohols, such as 3-methoxybutanol, benzyl alcohol, 1,2-propanediol, hexanol, diacetone alcohol, ethyldiglycol, isopropanol, 2-ethylhexanol, 2-methylpentane-2,4-diol, neopentylglycol, 2-methylpentane-2,4-diol, neopentylglycol, n-butane-1,3-diol, n-butane-1,5-diol, n-butane-2,5-diol and/or glycols and/or polyethylene glycols and/or fatty alcohols are used as dedusting agents.

3. Process according to Claim 1 or 2, **characterized in that** aliphatic ethers and/or cellulose ethers and/or alkoxylates and/or methyl/ethyl fatty acid ethers are used as dedusting agents.

4. Process according to any of Claims 1 to 3, **characterized in that** tertiary aliphatically saturated monocarboxylic acids having 5-20 carbon atoms, unsaturated monocarboxylic acids having 5 to 20 carbon atoms, fatty acids and salts thereof and mixtures thereof are used as dedusting agents.

5. Process according to any of Claims 1 to 4, **characterized in that** fatty acid esters, N-alkyl-N-alkanolamines, propylene carbonate, acetates, such as isopropyl acetate, hexyl acetate or ethylglycol acetate, aliphatic phosphoric acid esters and mixtures thereof are used as dedusting agents.

6. Process according to any of Claims 1 to 5, **characterized in that** cyclohexanone, methyl isobutyl ketones, methyl heptyl ketones and mixtures thereof are used as dedusting agents.

7. Process according to any of Claims 1 to 6, **characterized in that** perfluoropolymethyl isopropyl ether is used as the dedusting agent.

8. Process according to any of Claims 1 to 7, **characterized in that** silicone oils, polysiloxane-polyether copolymers and mixtures thereof are used as dedusting agents.

9. Process according to any of Claims 1 to 8, **characterized in that** hydrocarbons are used as dedusting agents.

10. Process according to any of Claims 1 to 9, **characterized in that** the pulverulent building material composition has a particle size fraction, determined by laser diffractometry, of at least 2% by weight ≤ 68 µm and at least 10% by weight ≤ 200 µm.

11. Process according to any of Claims 1 to 10, **characterized in that** the building material composition contains pulverulent polymers and in particular redispersible polymer powders.

12. Process according to any of Claims 1 to 11, **characterized in that** the building material composition has a proportion of 0.01 to 6% by weight of dedusting agent.

13. Process according to any of Claims 1 to 12, **characterized in that** the building material composition has a water content according to Karl Fischer of less than 5% by weight.

14. Process according to any of Claims 1 to 13, **characterized in that** the building material composition additionally contains at least one member of the series consisting of binders, fillers, thickeners, water retention agents, dispersants, additives, pigments, organic or inorganic fibres.

15. Process according to any of Claims 1 to 14, **characterized in that** the building material composition has a proportion in the range from 5 to 80% by weight of hydraulic binder.

## Revendications

1. Procédé pour le dépoussiérage d'une composition de matériau de construction sous forme de poudre, **caractérisé en ce qu'**au moins un agent de dépoussiérage liquide à 20°C à une température entre 41 et 150°C est mis en contact avec la composition de matériau de construction sous forme de poudre.

2. Procédé selon la revendication 1, **caractérisé en ce qu'**on utilise, comme agent de dépoussiérage, des alcools tels que le 3-méthoxybutanol, l'alcool benzylique, le 1,2-propanediol, l'hexanol, l'alcool diacétonique, l'éthyldiglycol, l'isopropanol, le 2-éthylhexanol, le 2-méthylpentane-2,4-diol, le néopentylglycol, le 2-méthylpentane-2,4-diol, le néopentylglycol, le n-butane-1,3-diol, le n-butane-1,5-diol, le n-butane-2,5-diol et/ou des glycols et/ou des polyéthylèneglycols et/ou des alcools gras.

3. Procédé selon la revendication 1 ou 2, **caractérisé en ce qu'**on utilise, comme agent de dépoussiérage, des éthers aliphatiques et/ou des éthers de cellulose et/ou des alcoxylates et/ou des méthyl/éthyl-acide gras-éthers.

4. Procédé selon l'une quelconque des revendications 1 à 3, **caractérisé en ce qu'**on utilise, comme agent de dépoussiérage, des acides monocarboxyliques tertiaires aliphatiquement saturés comprenant 5-20 atomes de carbone, des acides monocarboxyliques insaturés comprenant 5 à 20 atomes de carbone, des acides gras et leurs sels ainsi que leurs mélanges.

5. Procédé selon l'une quelconque des revendications 1 à 4, **caractérisé en ce qu'**on utilise, comme agent de dépoussiérage, des esters d'acide gras, des N-alkyl-N-alcanolamines, du propylènecarbonate, des acétates tels que l'acétate d'isopropyle, l'acétate d'hexyle, l'acétate d'éthylglycol, les esters aliphatiques d'acide phosphorique et leurs mélanges.

6. Procédé selon l'une quelconque des revendications 1 à 5, **caractérisé en ce qu'**on utilise, comme agent de dépoussiérage, de la cyclohexanone, des méthylisobutylcétones, des méthylheptylcétones et leurs mélanges.

7. Procédé selon l'une quelconque des revendications 1 à 6, **caractérisé en ce qu'**on utilise, comme agent de dépoussiérage, du perfluoropolyméthylisopropyléther.

8. Procédé selon l'une quelconque des revendications 1 à 7, **caractérisé en ce qu'**on utilise, comme agent de dépoussiérage, des huiles de silicone, des copolymères de polysiloxane-polyéther et leurs mélanges.

9. Procédé selon l'une quelconque des revendications 1 à 8, **caractérisé en ce qu'**on utilise, comme agent de dépoussiérage, des hydrocarbures.

10. Procédé selon l'une quelconque des revendications 1 à 9, **caractérisé en ce que** la composition de matériau de construction sous forme de poudre présente une proportion de grosseurs de grains, déterminée par diffractométrie de rayon laser, d'au moins 2% en poids ≤ 68 µm et d'au moins 10% en poids ≤ 200 µm.

11. Procédé selon l'une quelconque des revendications 1 à 10, **caractérisé en ce que** la composition de matériau de construction contient des polymères sous forme de poudre et en particulier des poudres polymères redispersibles.

12. Procédé selon l'une quelconque des revendications 1 à 11, **caractérisé en ce que** la composition de matériau de construction présente une proportion d'agent de dépoussiérage de 0,01 à 6% en poids.

13. Procédé selon l'une quelconque des revendications 1 à 12, **caractérisé en ce que** la composition de matériau de construction présente une teneur en eau selon Karl-Fischer inférieure à 5% en poids.

14. Procédé selon l'une quelconque des revendications 1 à 13, **caractérisé en ce que** la composition de matériau de construction contient en outre au moins un représentant de la série liants, charges, épaississants, agents de rétention d'eau, dispersants, additifs, pigments, fibres organiques ou inorganiques.

15. Procédé selon l'une quelconque des revendications 1 à 14, **caractérisé en ce que** la composition de matériau de construction présente une proportion de liant hydraulique dans la plage de 5 à 80% en poids.
